# EUROPÄISCHE PATENTSCHRIFT

(11) **EP 1 106 547 B1**
(45) Veröffentlichungstag und Bekanntmachung des Hinweises auf die Patenterteilung: **06.07.2005**
(21) Anmeldenummer: 00125542.1
(22) Anmeldetag: 22.11.2000
(51) Int. Cl.: B65G 53/24, B65G 53/28, G01F 11/28, F16K 7/06

(54) **Vorrichtung und Verfahren zum pneumatischen Fördern pulverförmiger Stoffe sowie Verwendung der Vorrichtung**
Device and method for pneumatically conveying powdered materials, and use of the device
Dispositif et procédé pour le transport pneumatique de matières pulvérulentes ainsi que l'utilisation du dispositif

(30) Priorität: 10.12.1999 DE 19959473
(43) Veröffentlichungstag der Anmeldung: 13.06.2001
(73) Patentinhaber: Dietrich, Yves, 1316 Chevilly (CH); Dietrich, Frédéric, jun., 1054 Morrens (CH)
(72) Erfinder: Dietrich, Frédéric, sen., 1801 Le Mont Pelerin (VD) (CH)
(74) Vertreter: Hiebsch, Gerhard F., Dipl.-Ing.

(56) Entgegenhaltungen:
- WO-A-82/00349
- WO-A-98/17558
- CH-A- 676 112
- DE-A- 2 437 799
- DE-A- 19 726 550
- US-A- 3 882 899
- US-A- 5 117 870

## Beschreibung

Die Erfindung betrifft eine Vorrichtung und ein Verfahren zum pneumatischen Fördern pulverförmiger Stoffe in einem Rohrsystem, wobei der Stoff mit Unterdruck angesaugt sowie ein gegebenes Volumen mit Überdruck zur Weiterführung abge-geben wird, nach dem Oberbegriff des Anspruchs 1. Zudem erfasst die Erfindung die Verwendung dieser Vorrich-tung und ein mit dieser durchführbares Verfahren. Eine Vorrichtung und ein Verfahren dieser Art sind durch die WO 98 17 558 der Anmelderin bekannt geworden.

Eine weisere Vorrichtung bietet die Schrift zu DE-A1-24 37 799 an; diese zeigt eine -- auf ein Lastwagen-Fahrgestell montierte -- pneumatische Förderanlage, bei der eine Vakuumpumpe und ein Kompressor wechselweise jeweils mit einem von zwei Behältern zum Absaugen des zu fördernden -von einem Saugrüssel aufzunehmenden -- Haufwerks über einen am Behälter obenliegenden Sauganschluss bzw. zur Druckförderung des in einem der Behälter befindlichen Haufwerks durch eine an den unteren Ausgängen der Behälter angeschlossene Druckförderleitung verbunden ist; das Umschalten von der Saugförderung zur Druckförderung und umgekehrt erfolgt selbsttätig in Abhängigkeit vom Füllungsgrad mindestens einer der beiden Behälter durch eine Umsteuerung. Zum Fördern von staubförmigem oder körnigem Haufwerk bei der Saugförderung wird die Vakuumpumpe im Wechsel über den oben liegenden Absauganschluss, den Behälter und einen Ansauganschluss bzw. den anderen oben liegenden Absauganschluss, den Behälter und einem anderen Ansauganschluss mit dem Saugrüssel verbunden sowie gleichzeitig zur Druckförderung der Kompressor abwechselnd über den oben liegenden Absauganschluss den Behälter und den Ausgang oder den oben liegenden Absauganschluss, den Behälter und den Ausgang mit der Druckförderleitung verbunden. Am Boden des Behälters ist zum einen ein als Auslauftrichter ausgebildeter Siebboden sowie zum anderen darunter ein Druckluftanschluss vorgesehen.

In der WO 98 17 558 der Anmelderin wird eine Vorrichtung zum pneumatischen Fördern pulverförmiger Stoffe eines spezifischen Gewichtes von 0,1 bis 15,0 g/cm³ sowie mit einem Korngrößenbereich zwischen 0,1 bis 300 µm als Fördergut unter Einsatz eines Filters in Rohrsystemen erörtert, bei der das Verhältnis der Lange eines eine Pumpkammer enthaltenden Behälters zur zeitweiligen Aufnahme des Fördergutes zu seinem inneren Durchmesser größer ist als 0,5. Zudem entspricht die Weite eines zwischen einer Vakuumpumpe zum Ansaugen des Fördergutes und dem Behälter vorgesehenen -als in einem Filtereinsatz auswechselbar angebrachte plattenartige Filtermembrane ausgebildeten -- Filters höchstens dessen von jenem Durchmesser bestimmten Querschnitt.

Aus der US-A-3 882 899 ist ein Klemmventil mit axialem Kolben zum Umpumpen von flüssigen Medien aus einem Behälter in einen anderen bekannt.

Schließlich bietet die CH-A-676 112 eine Vorrichtung zum pneumatischen Fördern pulverförmiger Stoffe in einem Horizontalrohr mit einem zwischen zwei Ventilen angeordneten Filter an. Letzteres ist einem Dreiwegeventil vorgeschaltet, das an eines der Ventile angeschlossen sowie einer Vakuumquelle nachgeordnet ist. Neben jenen Ventilen führen radiale Rohre zu Hilfsventilen, die miteinander durch eine Leitung verbunden sowie an eine Druckquelle mit einem Verteiler angeschlossen sind. Letzterer wiederum ist an die beiden Ventile der Horizontalleitung angefügt.

Zudem beschreibt die EP-A-0 574 596 eine Anlage für das pneumatische Umschlagen von Zement aus Schiffen in Silos mittels eines sog. Schleusenbehälters aus mehreren Behältersegmenten; im obersten Behältersegment sitzt ein Abluftfilter, das unterste Behältersegment verjüngt sich trichterartig.

In Kenntnis dieser Gegebenheiten hat sich der Erfinder das Ziel gesetzt, die Genauigkeit einer kontinuierlichen Dosierung bei einer kostengünstigen Förderung pulverförmiger Stoffe zu erhöhen.

Erfindungsgemäß ist die Vorrichtung innerhalb des Rohrsystems von modularem Aufbau und jeweils aus Einheiten mit mehreren Dosierkammern zusammengesetzt, die jeweils mit einem Durchmesser von 0,5 bis 100 mm -- vorzugsweise 1 bis 80 mm -- ausgestattet sind; die Zuführleitungen und die Austragsleitungen sind zu einem gemeinsamen Zuförderrohr bzw. einem gemeinsamen Austragsrohr zusammengeführt. Zudem hat sich eine Länge der Dosierkammer von deren 5- bis 30-fachen, vorteilhafterweise des 10- bis 20-fachen Durchmessers als günstig erwiesen.

Des weiteren soll den Leitungen des Rohrsystems zumindest eine Steuerungseinheit zugeordnet sein; die Leitungen sollen zumindest im Bereich der Steuerungseinheit einen veränderlichen Querschnitt aufweisen, insbesondere elastisch verformbar ausgebildet sein.

Beispielsweise kann die Steuerungseinheit bzw. das Steuerorgan mit zwei in Abstand zueinander verlaufenden linearen Anschlagbereichen versehen werden, welchen wechselweise anlegbare und querschnittlich verformbare Leitungen zugeordnet sind. Günstig sind dafür Anschlagbereiche als Seiten eines Steuerungsrahmens. Auch ist es vorteilhaft, die Leitung zumindest im Bereich der Steuerungseinheit aus elastischem Werkstoff zu formen.

Im Rahmen der Erfindung liegt es, dass im Steuerungsrahmen wenigstens ein Druckerzeugungselement -- etwa ein Steuerkolben -- bewegbar lagert und nahe den Anschlagbereichen oder Rahmenseiten mit Klemmleisten od.dgl. Druckorganen versehen ist, welche zum Verformen der Leitungsquerschnitte gegen diese geführt werden.

Bei einer anderen Ausgestaltung bietet die Steuerungseinheit einen Anschlagbereich für Druckerzeugungselemente -vor allem Steuerkolben -- an, deren jedem ein Paar von Leitungen zugeordnet ist.

Im Rahmen der Erfindung liegt auch eine Nockenscheibe oder Nockenwelle, deren Nocken während ihrer Drehung in die Bewegungsbahn ragende Dosierventile betätigt.

Erfindungsgemäß wird eine kontinuierliche Dosierung wesentlich höherer Genauigkeit erreicht, da sie mittels mehrerer kleiner und genau abgestimmter Teildosierungen durchgeführt wird. Die im Rahmen der Erfindung liegende Vorrichtung erlaubt nicht nur eine Dosierung einer bestimmten Menge, sondern ergibt ebenfalls die Möglichkeit, eine bestimmte Menge eines pulverförmigen Produktes in einer konstanten Zeiteinheit einem Verbraucher zuzuführen. Um eine solche gepulste -- bzw. aus mehreren Quanten bestehende -- Dosierung durchführen zu können, ist eine genau arbeitende Steuerung von besonderer Bedeutung.

Das erfindungsgemäße Verfahren zeichnet sich dadurch aus, dass die Steuerung durch Verschließen der Saugleitung und der Gasdruckleitung durchgeführt wird, insbesondere durch Abklemmen von aus elastischem Werkstoff bestehenden Zuführschläuchen für Vakuum und Überdruck.

Als günstig hat sich ein Unterdruck zwischen 10 und 600 mbar -- vorzugsweise zwischen 20 und 500 mbar -- erwiesen bzw. ein Überdruck von 1 bis 6 bar, vorzugsweise von 2 bis 5 bar.

Erfindungsgemäß werden mit dem Steuerimpuls für einen Kolben der Steuerungseinheit die gesamten zu steuernden verformbaren Zu- und Ableitungen in sehr kurzen Steuerungsimpulszeiten geschlossen; vorteilhaft sind Steuerimpulse zum Ansaugen und Ausstoßen des pulverförmigen Produktes einer Frequenz von 0,1 bis 5 sec., vorzugsweise von 0,2 bis 4 sec.

Zum Schutze der Dosierzone kann der pulverförmige Werkstoff zudem auch unter Schutzgas gefördert werden.

Insgesamt ergibt sich ein Erfindungsgegenstand, der die vom Erfinder gesehene Aufgabe in bestechender Weise zu lösen vermag, insbesondere zum Fördern von pulverförmigen Werkstoffen, auch metallischen Substanzen dieser Art.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt jeweils in schematischer Wiedergabe in
- Fig. 1:: eine Vorrichtung in Seitenansicht mit zwei Dosierkammern zum Dosieren pulverförmiger Stoffe;
- Fig. 2, 4:: jeweils eine Steuereinheit der Vorrichtung nach Fig. 1 bzw. Fig. 3;
- Fig. 3:: eine modulare Dosiervorrichtung in Seitenansicht mit drei Dosierkammern;
- Fig. 5:: die Draufsicht auf eine weitere Steuereinheit.

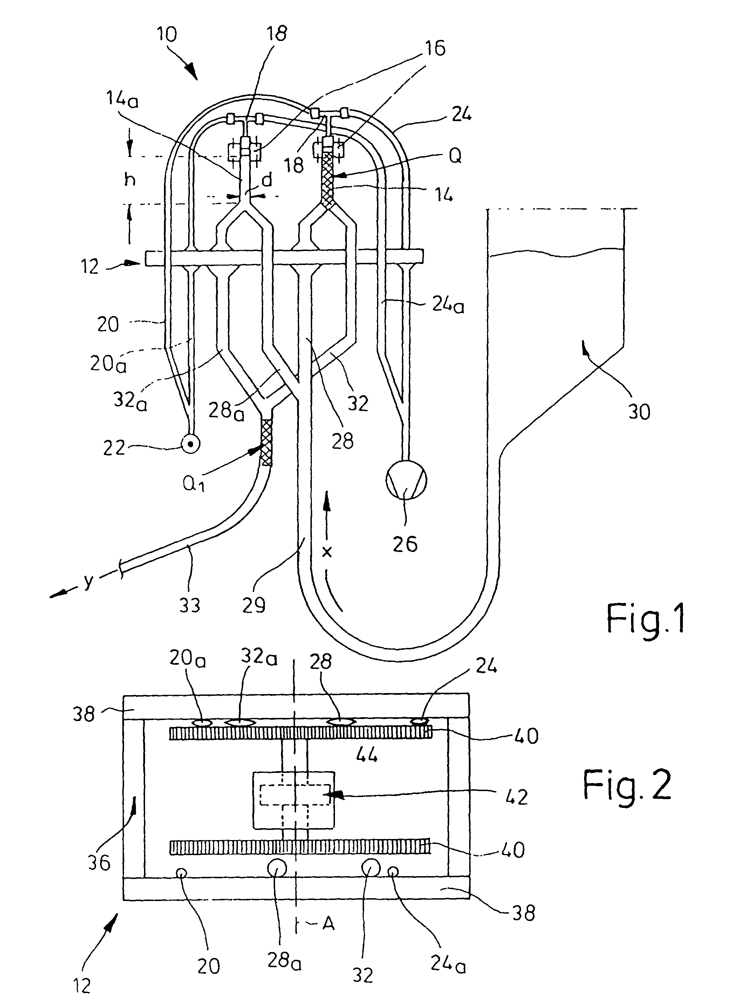

Eine Vorrichtung 10 zum volumetrischen Dosieren von pulverförmigen Stoffen -- beispielsweise von metallischen, nichtmetallischen und chemischen Produkten in einem Korngrößenbereich zwischen 0,1 und 300 µm -- weist gemäß Fig. 1 oberhalb einer horizontalen Steuerungseinrichtung 12 zwei Dosierkammern 14, 14ₐ auf, die jeweils -- unter Zwischenschaltung einer Trennfiltermembrane 16 -- über ein T-förmiges Kopfrohr 18 mittels einer Gasdruckleitung 20, 20ₐ an eine Druckgaszuleitung 22 angeschlossen sind. Das Kopfrohr 18 -- und damit die Dosierkammer 14 bzw. 14ₐ -ist anderseits durch eine Saugleitung 24, 24ₐ mit einer Vakuumpumpe 26 verbunden. Jene Filtermembrane 16 bildet ein gasdurchlässiges Filter, um ein unerwünschtes Eindringen des pulverförmigen Stoffes in die Leitungen 20, 24 bzw. 20ₐ, 24ₐ hintanzuhalten. In der Zeichnung vernachlässigt ist eine der Vorrichtung zugeordnete Vibrationseinrichtung zum Erzeugen eines kontinuierlichen Pulverstromes.

Vom Fuße der rohrförmigen und vertikal gestellten Dosierkammer 14 bzw. 14ₐ gehen jeweils zwei Rohrleitungen aus, nämlich eine Zuführleitung 28, 28ₐ für den aus einem Pulverbehälter 30 kommenden pulverförmigen Stoff sowie eine für letzteren bestimmte Austragsleitung 32 bzw. 32ₐ. Sowohl die beiden Zuführleitungen 28, 28ₐ als auch die beiden Austragsleitungen 32, 32ₐ sind in geringem Abstand zu ihren Dosierkammern 14, 14ₐ zu einem gemeinsamen Zuförderrohr 29 bzw. einem Austragsrohr 33 zusammengeführt. Gleiches gilt für die Gasdruckleitungen 20, 20ₐ und die Saugleitungen 24, 24ₐ; diese münden nahe der Druckgasleitung 22 bzw. der Vakuumpumpe 26 ineinander.

Mit Q ist der pulverförmige Stoff in der in Fig. 1 rechten Dosierkammer 14 bezeichnet, die in geschlossenem Zustand wiedergegeben ist; gleichzeitig ist die andere Dosierkammer 14ₐ geöffnet. Unterhalb der Zusammenführung beider Austragsleitungen 32, 32ₐ ist im Austragsrohr 33 bei Q₁ ein dosiertes Quantum des pulverförmigen Stoffes angedeutet.

Mit der Vakuumpumpe 26 wird der pulverförmige Stoff in Pfeilrichtung x über die Saugleitung 24ₐ aus dem Pulverbehälter 30 in die geöffnete Dosierkammer 14ₐ eingesaugt und zu gleicher Zeit die dosierte Menge des pulverförmigen Stoffes Q aus der anderen Dosierkammer 14 durch den Überdruck in der Druckgasleitung 22 in das Austrittsrohr 33 geschoben (Austragsrichtung y).

Die Steuerung der Vorrichtung 10 erfolgt im Bereich der erwähnten Steuerungseinrichtung 12, die einen Steuerungsrahmen 36 enthält, innerhalb dessen an einer Rahmenseite 38 die Leitungen 20, 32, 24ₐ, 28ₐ mit geöffnetem Querschnitt sowie anderseits die Leitungen 20ₐ, 32ₐ, 24, 28 mit geschlossenem Querschnitt skizziert sind; letztere werden von einer aus Stahl bestehenden Klemmleiste 40 eines Steuerungsorgans 42 unter zeitweiliger Querschnittsverformung gegen die zugeordnete Rahmenseite 38 gedrückt bzw. gequetscht. Diese Klemmleiste 40 ist auch in Fig. 1 erkennbar. Die synchrone Bewegung der Klemmleisten 40 erfolgt mittels eines über ein gasförmiges Medium wie Druckluft, Stickstoff od.dgl. gesteuerten Steuerkolbens 44 des Steuerungsorgans 42 in Richtung von dessen Kolbenachse A.

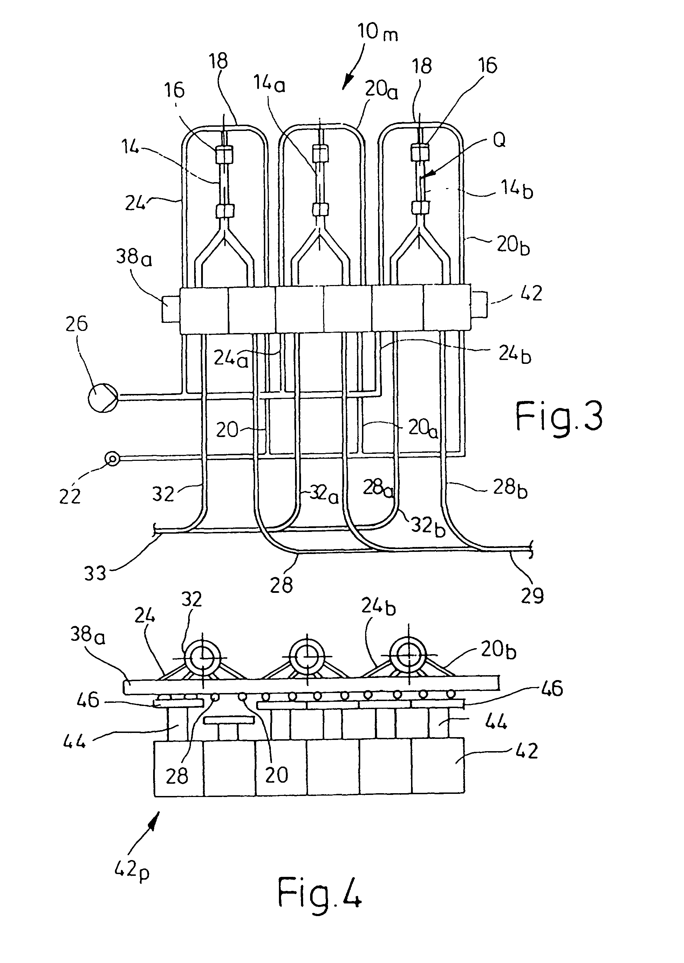

Die modulare Dosiervorrichtung 10ₘ der Fig. 3, 4 bietet drei Dosierkammern 14, 14ₐ, 14_{b} an, die jeweils in beschriebener Weise an Gasdruckleitungen 20, 20ₐ, 20_{b}, Saugleitungen 24, 24ₐ, 24_{b}, Zuführleitungen 28, 28ₐ, 28_{b} sowie Austragsleitungen 32, 32ₐ, 32_{b}, angeschlossen sind.

Zur Steuerung dieser Dosiervorrichtung 10ₘ ist in deren Steuerungsorgan 42ₚ jeweils eine Druckplatte 46 eines von sechs Steuerkolben 44 od.dgl. Druckerzeugungselementen einem Paar von Leitungen 24, 32; 28, 20; 24ₐ, 32ₐ; 28ₐ, 20ₐ; 24_{b}, 32_{b}; 28_{b}, 20_{b} zugeordnet. In Fig. 4 sind beispielsweise die aus elastischem Werkstoff bestehende Saugleitung 24 und die Austragsleitung 32 der Dosierkammer 14 gegen einen Druckbalken 38ₐ geführt sowie zeitweilig querschnittlich verformt, die Gasdruckleitung 20 und die Zuführleitung 28, die ebenfalls querschnittlich elastisch ausgebildet werden, sind hingegen geöffnet.

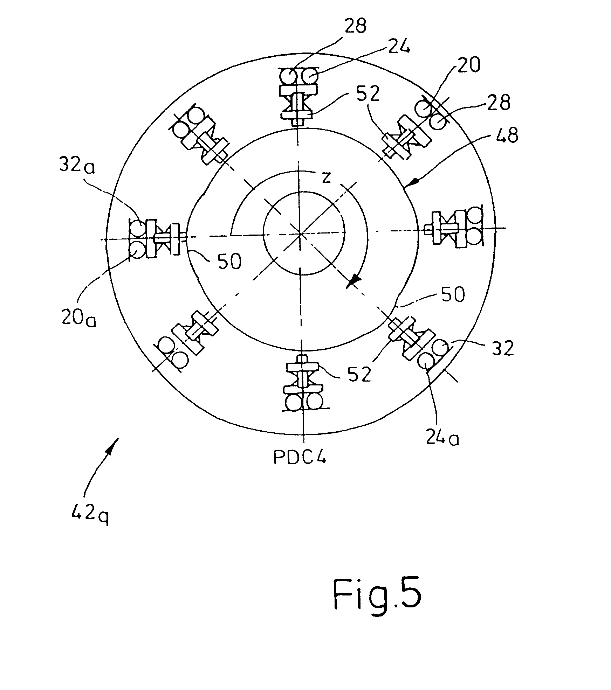

Ein Steuerungsorgan 42_{q} nach Fig. 5 zeigt eine in Richtung z umlaufende Nockenwelle oder Nockenscheibe 48 mit hier zwei Nocken 50 zum Ansprechen von Dosierventilen 52 in Umdrehungsreihenfolge. Statt der Nockenwelle kann zum gleichen Zweck auch eine exzentrisch gelagerte Scheibe vorgesehen werden.

Durch diese Technik der gepulsten Abgabe von Dosierungen relativ kleiner Mengen mit einer hohen Anzahl in einer bestimmten Zeiteinheit wird eine hohe statistische Genauigkeit der einzelnen Quanten und der Gesamtmenge in der Zeiteinheit erreicht.

Die Dosierkammern 14, 14ₐ, 14_{b} sollten einen Durchmesser d von 0,5 bis 100 mm -- vorzugsweise 1 bis 80 mm -- haben, und die Länge h sollte das 5-fache bis 30-fache des Durchmessers d betragen, vorzugsweise das 10-fache bis 20-fache. Das Entleeren und Füllen der Dosierkammern 14, 14ₐ, 14_{b} erfolgt in einer Impulsfrequenz von 0,1 bis 5 sec, vorzugsweise 0,2 bis 4 sec. Je nach Anzahl der Dosierkammern 14, 14ₐ, 14_{b} kann eine größere Menge des pulverförmigen Produkts dosiert bzw. gefördert werden.

Die erfindungsgemäße Dosierpumpe 10, 10ₘ eignet sich zum Fördern von sehr kleinen und auch von großen Mengen der pulverartigen Produkte, die dosiert kontinuierlich pulsierend oder -- bei zusätzlicher Verwendung einer Ausgleichsvorrichtung -- kontinuierlich fließend gefördert werden.

Nachfolgend seien einige Anwendungsbeispiele für die Dosiervorrichtung 10, 10ₘ wiedergegeben.

### BEISPIEL 1

Zum Herstellen von künstlichen Rubinen für die Uhrenindustrie war es erforderlich, ein Aluminiumoxidpulver mit einer Kornverteilung von etwa 5 µm mit hoher Genauigkeit in die Wasserstoff-Sauerstoff-Flamme zu fördern, in der es kontinuierlich aufgeschmolzen werden sollte. Die für diesen Vorgang notwendige Menge, die mit einem Impuls von jeweils 0,5 sec der Flamme zugeführt werden muss, betrug 5 bis 20 mg. Der Herstellungsvorgang für einen fertigen Rubin dauerte 3 bis 5 Stunden. Die dafür verwendete Dosiereinheit hatte drei Dosierkammern 14, 14ₐ, 14_{b}.

### BEISPIEL 2

Für die Erzeugung von Kindernahrung musste die Basismasse aus einer 15 g +/- 5 % fassenden Dose in ein Glas eingefüllt werden. Zum Befüllen wurde eine Dosiervorrichtung mit sechs Dosierkammern 14, 14ₐ bis 14ₑ verwendet. In einer

Stunde wurden 36000 Dosen in die verschiedenen Gläser eingefüllt. Die Impulszeit je Dose betrug 0,1 sec.

### BEISPIEL 3

Einem Plasmabrenner zum thermischen Spritzen sollte ein Wolframkarbid/Kobalt-Pulver mit einer Förderleistung von 150g/min kontinuierlich zugeführt werden. Der Fördereinheit 10ₘ hat drei Dosierkammern 14, 14ₐ, 14_{b} mit einem jeweiligen Füllgewicht von 1,25 g, die Impulszeit lag bei 0,32 sec.

### BEISPIEL 4

In einer Mühle sollten 30 m³ gefördert bzw. dosiert werden. Eine Dosis betrug 16 dm³. Die Fördereinheit hatte fünf Dosierkammern 14, 14ₐ bis 14_{d}, und der Impulstakt betrug 0,5 sec.

## Patentansprüche

1. Vorrichtung zum pneumatischen Fördern pulverförmiger Stoffe in einem Rohrsystem, bei der ein Volumen mit Unterdruck angesaugt und mit Überdruck zur Weiterführung abgegeben wird sowie zumindest eine über ein Steuerungsorgan (42, 42ₚ, 42_{q}) wechselweise füll- und entleerbare Dosierkammer (14, 14ₐ, 14_{b}) zum Dosieren des pulverförmigen Stoffes vorgesehen und dieser ein Filter (16) zugeordnet ist, wobei an die Dosierkammer einerseits eine Gasdruckleitung (20, 20ₐ, 20_{b}) und eine Saugleitung (24, 24ₐ, 24_{b}) sowie anderseits eine Zuführleitung (28, 28ₐ, 28_{b}) und eine Austragsleitung (32, 32ₐ, 32_{b}) angeschlossen sowie die Gasdruckleitung und die Saugleitung unter Zwischenschaltung des Filters angeschlossen sind,
**dadurch gekennzeichnet,**
**dass** die Vorrichtung (10, 10ₘ) innerhalb des Rohrsystems von modularem Aufbau und jeweils aus Einheiten mit mehreren Dosierkammern (14, 14ₐ, 14_{b}) zusammengesetzt ist, die jeweils einen Durchmesser (d) von 0,5 bis 100 mm aufweisen, und dass die Zuführleitungen (28, 28ₐ, 28_{b}) zu einem gemeinsamen Zuförderrohr (29) sowie die Austragsleitungen (32, 32ₐ, 32_{b}) zu einem gemeinsamen Austragsrohr (33) zusammengeführt sind.

2. Vorrichtung nach Anspruch 1, **dadurch gekennzeichnet, dass** die Dosierkammer (14, 14ₐ, 14_{b}) einen Durchmesser (d) von 1 bis 80 mm aufweist.

3. Vorrichtung nach Anspruch 1 oder 2, **dadurch gekennzeichnet, dass** die Länge (h) der Dosierkammer (14, 14ₐ, 14_{b}) dem 5- bis 30-fachen, vorzugsweise dem 10-bis 20-fachen, Durchmesser (d) der Dosierkammer entspricht.

4. Vorrichtung nach einem der Ansprüche 1 bis 3, **dadurch gekennzeichnet, dass** den Leitungen (20, 20ₐ, 20_{b}, 24, 24ₐ, 24_{b}; 28, 28ₐ, 28_{b}; 32, 32ₐ, 32_{b}) des Rohrsystems zumindest ein Steuerungsorgan (42, 42ₚ, 42_{q}) zugeordnet ist und die Leitungen zumindest im Bereich des Steuerungsorgans einen veränderlichen Querschnitt aufweisen.

5. Vorrichtung nach Anspruch 4, **dadurch gekennzeichnet, dass** das Steuerungsorgan (42) zwei in Abstand zueinander verlaufende lineare Anschlagbereiche (38) aufweist, welchen wechselweise anlegbare und querschnittlich verformbare Leitungen (20, 24ₐ, 28ₐ; 32; 20ₐ, 24, 28, 32ₐ) zugeordnet sind.

6. Vorrichtung nach Anspruch 4 oder 5, **dadurch gekennzeichnet, dass** die Anschlagbereiche als Seiten (38) eines Steuerungsrahmens (36) ausgebildet sind.

7. Vorrichtung nach einem der Ansprüche 1 bis 6, **dadurch gekennzeichnet, dass** die Leitung (20, 20ₐ, 20_{b}; 24, 24ₐ, 24_{b}; 28, 28ₐ, 28_{b}; 32, 32ₐ, 32_{b}) zumindest im Bereich des Steuerungsorgans (42, 42ₚ, 42_{q}) aus elastischem Werkstoff geformt ist.

8. Vorrichtung nach Anspruch 6 oder 7, **dadurch gekennzeichnet, dass** im Steuerungsorgan (42, 42ₚ) wenigstens ein Druckerzeugungselement (44) bewegbar lagert, welches gegebenenfalls nahe den Anschlagbereichen oder Rahmenseiten (38) mit Klemmleisten (40) od.dgl. Druckorganen versehen ist, und/oder welches gegebenenfalls als Steuerkolben ausgebildet ist.

9. Vorrichtung nach einem der Ansprüche 1 bis 7, **dadurch gekennzeichnet, dass** das Steuerungsorgan (42ₚ) einen Anschlagbereich (38ₐ) für Druckerzeugungselemente (44) aufweist, deren jedem ein Paar von Leitungen (24, 32; 28, 20; 24ₐ, 32ₐ; 28ₐ, 20ₐ; 24_{b}, 32_{b}, 28ₐ, 20_{b}) zugeordnet ist, oder dass das Steuerungsorgan (42q) eine exzentrisch gelagerte Scheibe aufweist, der Dosierventile (52) für jeweils ein Paar von Leitungen (20ₐ, 32ₐ; 24, 28; 20, 28ₐ; 24ₐ, 32) zugeordnet sind, oder dass das Steuerungsorgan (42q) eine Nockenscheibe oder Nockenwelle (48) aufweist, deren Nocken (50) Dosierventile (52) für jeweils ein Paar von Leitungen (20ₐ, 32ₐ; 24, 28; 20, 28ₐ; 24ₐ; 32) zugeordnet sind.

10. Vorrichtung nach einem der Ansprüche 1 bis 6, **dadurch gekennzeichnet, dass** das Steuerungsorgan (42_{q}) eine Nockenscheibe oder Nockenwelle (48) aufweist, deren Nocken (50) Dosierventile (52) für jeweils ein Paar von Leitungen (20ₐ, 32ₐ; 24, 28; 20, 28ₐ; 24ₐ, 32) zugeordnet sind.

11. Verfahren zum pneumatischen Fördern pulverförmiger Stoffe in einem Rohrsystem, bei dem ein Volumen mit Unterdruck angesaugt und mit Überdruck zur Weiterführung abgegeben sowie zumindest eine innerhalb des Rohrsystems befindliche Dosierkammer zum Dosieren des pulverförmigen Stoffes über ein Steuerungsorgan wechselweise gefüllt und entleert wird, unter Einsatz einer Vorrichtung nach wenigstens einem der voraufgehenden Patentansprüche, **dadurch gekennzeichnet, dass** die Steuerung durch Verschließen der Saugleitung sowie der Gasdruckleitung und/oder durch Abklemmen von aus elastischem Werkstoff bestehenden Zuführschläuchen für Vakuum und Überdruck durchgeführt wird.

12. Verfahren nach Anspruch 11, **gekennzeichnet durch** einen Unterdruck zwischen 10 und 600 mbar, vorzugsweise zwischen 20 und 500 mbar oder **gekennzeichnet durch** einen Überdruck von 1 bis 6 bar, vorzugsweise von 2 bis 5 bar.

13. Verfahren nach Anspruch 11 oder 12, **dadurch gekennzeichnet, dass** mit dem Steuerimpuls für einen Kolben des Steuerungsorgans die zu steuernden verformbaren Zu- und Ableitungen in sehr kurzen Steuerungsimpulszeiten geschlossen werden.

14. Verfahren nach Ansprüch 11 oder 12, **dadurch gekennzeichnet, dass** mittels des Steuerungsorgans Dosierventile betätigt werden.

15. Verfahren nach einem der Ansprüche 11 bis 14, **gekennzeichnet durch** Steuerimpulse zum Ansaugen und Ausstoßen des pulverförmigen Produktes einer Frequenz von 0,1 bis 5 sec., vorzugsweise von 0,2 bis 4 sec, und/oder **durch** ein Fördern des pulverförmigen Werkstoffs unter Schutzgas.

16. Verwendung der Vorrichtung nach einem der Ansprüche 1 bis 10 zum kontinuierlichen Fördern und Dosieren von pulverförmigen Stoffen, gegebenenfalls von pulverförmigen metallischen Werkstoffen, oder zum kontinuierlichen Fördern von chemischen Pulvern.

## Claims

1. Device for the pneumatic conveying of pulverulent materials in a pipe system, in which a volume is drawn in using negative pressure and is released to continue using excess pressure, and at least one metering chamber (14, 14ₐ, 14_{b}) which can be alternately filled and emptied via a control element (42, 42ₚ, 42_{q}) is provided for metering the pulverulent material and a filter (16) is assigned to the latter, wherein on the one side a gas pressure pipe (20, 20ₐ, 20_{b}) and a suction pipe (24, 24ₐ, 24_{b}) are connected to the metering chamber and on the other side a supply pipe (28, 28ₐ, 28_{b}) and a discharge pipe (32, 32ₐ, 32_{b}), and the gas pressure pipe and the suction pipe are connected with insertion of the filter, **characterised in that** the device (10, 10ₘ) is assembled within the pipe system of modular structure and in each case from units having several metering chambers (14, 14ₐ, 14_{b}), which have in each case a diameter (d) of 0.5 to 100 mm, and **in that** the supply pipes (28, 28ₐ, 28_{b}) are combined to form a common conveying pipe (29) and the discharge pipes (32, 32ₐ, 32_{b}) are combined to form a common discharge pipe (33).

2. Device according to claim 1, **characterised in that** the metering chamber (14, 14ₐ, 14_{b}) has a diameter (d) of 1 to 80 mm.

3. Device according to claim 1 or 2, **characterised in that** the length (h) of the metering chamber (14, 14ₐ, 14_{b}) corresponds to 5 to 30 times, preferably 10 to 20 times, the diameter (d) of the metering chamber.

4. Device according to one of claims 1 to 3, **characterised in that** at least one control element (42, 42ₚ, 42_{q}) is assigned to the pipes (20, 20ₐ, 20_{b}, 24, 24ₐ, 24_{b}; 28, 28ₐ 28_{b}; 32, 32ₐ, 32_{b}) of the pipe system and the pipes have a changeable cross-section at least in the region of the control element.

5. Device according to claim 4, **characterised in that** the control element (42) has two linear stop regions (38) running at a distance from one another, to which pipes (20, 24ₐ, 28ₐ; 32; 20ₐ, 24, 28, 32ₐ) which can be installed and can be deformed in cross-section alternately are assigned.

6. Device according to claim 4 or 5, **characterised in that** the stop regions are designed as sides (38) of a control frame (36).

7. Device according to one of claims 1 to 6, **characterised in that** the pipe (20, 20ₐ, 20_{b}; 24, 24ₐ, 24_{b}; 28, 28ₐ, 28_{b}; 32, 32ₐ, 32_{b}) is shaped from resilient material at least in the region of the control element (42, 42ₚ, 42_{q}).

8. Device according to claim 6 or 7, **characterised in that** at least one pressure-generating element (44), which is provided with clamping strips (40) or similar pressure elements optionally close to the stop regions or frame sides (38), and/or which is designed optionally as a control piston, is mounted to be movable in the control element (42, 42ₚ).

9. Device according to one of claims 1 to 7, **characterised in that** the control element (42ₚ) has a stop region (38ₐ) for pressure-generating elements (44), to each of which a pair of pipes (24, 32; 28, 20; 24ₐ, 32ₐ; 28ₐ, 20ₐ; 24_{b}, 32_{b}, 28ₐ, 20_{b}) is assigned, or **in that** the control element (42q) has an eccentrically mounted disc, to which metering valves (52) for in each case one pair of pipes (20ₐ, 32ₐ; 24, 28; 20, 28ₐ; 24ₐ, 32) are assigned, or **in that** the control element (42q) has a cam disc or camshaft (48), to the cams (50) of which metering valves (52) for in each case a pair of pipes (20ₐ, 32ₐ; 24, 28; 20, 28ₐ; 24ₐ, 32) are assigned.

10. Device according to one of claims 1 to 6, **characterised in that** the control element (42_{q}) has a cam disc or camshaft (48), to the cams (50) of which metering valves (52) for in each case one pair of pipes (20ₐ, 32ₐ; 24, 28; 20, 28ₐ; 24ₐ, 32) are assigned.

11. Process for the pneumatic conveying of pulverulent materials in a pipe system, in which a volume is drawn in using negative pressure and is released to continue using excess pressure, and at least one metering chamber situated within the pipe system is alternately filled and emptied for metering the pulverulent material via a control element, using a device according to at least one of the preceding patent claims, **characterised in that** control is carried out by closing the suction pipe and the gas pressure pipe and/or by disconnecting supply hoses consisting of resilient material for vacuum and excess pressure.

12. Process according to claim 11, **characterised by** a negative pressure between 10 and 600 mbar, preferably between 20 and 500 mbar, or **characterised by** an excess pressure of 1 to 6 bar, preferably of 2 to 5 bar.

13. Process according to claim 11 or 12, **characterised in that** the deformable supply pipes and discharge pipes to be controlled are closed in very short control pulse times using the control pulse for a piston of the control element.

14. Process according to claim 11 or 12, **characterised in that** metering valves are actuated by means of the control element.

15. Process according to one of claims 11 to 14, **characterised by** control pulses for drawing in and expelling pulverulent product of a frequency from 0.1 to 5 seconds, preferably from 0.2 to 4 seconds, and/or by conveying the pulverulent material under protective gas.

16. Use of the device according to one of claims 1 to 10 for the continuous conveying and metering of pulverulent materials, optionally of pulverulent metallic materials, or for the continuous conveying of chemical powders.

## Revendications

1. Dispositif permettant le transport pneumatique de substances pulvérulentes dans un système tubulaire, dans lequel un certain volume est aspiré par une dépression, puis soumis à une surpression pour poursuivre son déplacement, et il est prévu au moins une chambre de dosage (14, 14ₐ, 14_{b}) pouvant être, tour à tour, remplie et vidée, par l'intermédiaire d'un organe de commande (42, 42ₚ, 42_{q}), permettant de doser la substance pulvérulente, et un filtre (16) est affecté à celle-ci, moyennant quoi, sont reliées à la chambre de dosage, d'une part une conduite de pression gazeuse (20, 20ₐ, 20_{b}) et une conduite d'aspiration (24, 24ₐ, 24_{b}) et, d'autre part, une conduite d'alimentation (28, 28ₐ, 28_{b}) et une conduite d'évacuation (32, 32ₐ, 32_{b}), et la conduite de pression gazeuse ainsi que la conduite d'aspiration sont reliées en intercalant le filtre,
**caractérisé en ce que** le dispositif (10, 10ₘ), à l'intérieur du système tubulaire, est composé d'une structure modulaire et respectivement d'unités présentant plusieurs chambres de dosage (14, 14ₐ, 14_{b}), lesquelles ont respectivement un diamètre (d) de 0,5 à 100 mm, et **en ce que** les conduites d'alimentation (28, 28ₐ, 28_{b}) débouchent dans un tube d'alimentation (29) commun, et les conduites d'évacuation (32, 32ₐ, 32_{b}) débouchent dans un tube d'évacuation (33) commun.

2. Dispositif selon la revendication 1, **caractérisé en ce que** la chambre de dosage (14, 14ₐ, 14_{b}) a un diamètre (d) compris entre 1 et 80 mm.

3. Dispositif selon l'une quelconque des revendications 1 ou 2, **caractérisé en ce que** la longueur (h) de la chambre de dosage (14, 14ₐ, 14_{b}) représente 5 à 30 fois, de préférence 10 à 20 fois, le diamètre (d) de la chambre de dosage.

4. Dispositif selon l'une quelconque des revendications 1 à 3, **caractérisé en ce que**, aux conduites (20, 20ₐ, 20_{b}, 24, 24ₐ, 24_{b} ; 28, 28ₐ, 28_{b} ; 32, 32ₐ, 32_{b}) du système tubulaire est affecté au moins un organe de commande (42, 42ₚ, 42_{q}), et les conduites présentent, au moins dans la zone de l'organe de commande, une section variable.

5. Dispositif selon la revendication 4, **caractérisé en ce que** l'organe de commande (42) présente deux zones de butée (38) linéaires, situées à une certaine distance l'une de l'autre, auxquelles sont affectées des conduites (20, 24ₐ, 28ₐ; 32, 20ₐ, 24, 28, 32ₐ), qui sont tour à tour déformables au niveau de leur section et établies de manière fixe.

6. Dispositif selon l'une quelconque des revendications 4 ou 5, **caractérisé en ce que** les zones de butée sont configurées sous la forme de côtés (38) d'un bâti de commande (36).

7. Dispositif selon l'une quelconque des revendications 1 à 6, **caractérisé en ce que** la conduite (20, 20ₐ, 20_{b}; 24, 24ₐ, 24_{b}; 28, 28ₐ, 28_{b} ; 32, 32ₐ, 32_{b}) est réalisée dans une matière élastique, au moins dans la zone de l'organe de commande (42, 42ₚ, 42_{q}).

8. Dispositif selon l'une quelconque des revendications 6 ou 7, **caractérisé en ce que**, dans l'organe de commande (42, 42ₚ) est disposé, de manière à pouvoir se déplacer, au moins un élément générateur de pression (44), lequel élément est doté, le cas échéant, à proximité des zones de butée ou côtés de bâti (38), de réglettes de serrage (40) ou organes de pression similaires, et / ou lequel est configuré, le cas échéant, sous la forme d'un piston de commande.

9. Dispositif selon l'une quelconque des revendications 1 à 7, **caractérisé en ce que** l'organe de commande (42ₚ) présente une zone de butée (38ₐ) pour les éléments générateurs de pression (44), moyennant quoi à chacun d'entre eux est affectée une paire de conduites (24, 32 ; 28, 20 ; 24ₐ, 32ₐ; 28ₐ, 20ₐ ; 24_{b}, 32_{b}, 28ₐ, 20_{b}), ou **en ce que** l'organe de commande (42_{q}) présente un disque disposé de manière excentrée, auquel sont affectées des soupapes de dosage (52) pour respectivement une paire de conduites (20ₐ, 32ₐ; 24, 28 ; 20, 28ₐ ; 24ₐ, 32), ou **en ce que** l'organe de commande (42_{q}) présente un disque à cames ou un arbre à cames (48), auxquelles cames (50) sont affectées des soupapes de dosage (52) pour respectivement une paire de conduites (20ₐ, 32ₐ; 24, 28 ; 20, 28ₐ ; 24ₐ, 32).

10. Dispositif selon l'une quelconque des revendications 1 à 6, **caractérisé en ce que** l'organe de commande (42_{q}) présente un disque à cames ou un arbre à cames (48), auxquelles cames (50) sont affectées des soupapes de dosage (52) pour respectivement une paire de conduites (20ₐ, 32ₐ; 24, 28 ; 20, 28ₐ ; 24ₐ, 32).

11. Dispositif permettant le transport pneumatique de substances pulvérulentes dans un système tubulaire, dans lequel un certain volume est aspiré par une dépression, puis soumis à une surpression pour poursuivre son déplacement, et au moins une chambre de dosage se trouvant à l'intérieur du système tubulaire, permettant de doser la substance pulvérulente, est tour à tour remplie et vidée par l'intermédiaire d'un organe de commande, en utilisant un dispositif selon au moins l'une quelconque des revendications précédentes, **caractérisé en ce que** la commande est réalisée en fermant la conduite d'aspiration et la conduite de pression gazeuse et / ou en dégageant par pincement les tuyaux d'alimentation réalisés dans une matière élastique pour créer du vide et une surpression.

12. Dispositif selon la revendication 11, **caractérisé par** une dépression comprise entre 10 et 600 mbars, de préférence entre 20 et 500 mbars, ou **caractérisé par** une surpression comprise entre 1 et 6 bars, de préférence entre 2 et 5 bars.

13. Dispositif selon l'une quelconque des revendications 11 ou 12, **caractérisé en ce que**, avec l'impulsion de commande destinée à un piston de l'organe de commande, les conduites d'alimentation et d'évacuation déformables devant être commandées sont fermées selon des durées d'impulsions de commande très courtes.

14. Procédé selon l'une quelconque des revendications 11 ou 12, **caractérisé en ce que** les soupapes de dosage sont actionnées à l'aide de l'organe de commande.

15. Procédé selon l'une quelconque des revendications 11 à 14, **caractérisé par** des impulsions de commande permettant d'aspirer et d'expulser le produit pulvérulent à une fréquence de 0,1 à 5 secondes, de préférence de 0,2 à 4 secondes, et / ou en véhiculant la substance pulvérulente dans une atmosphère contrôlée.

16. Utilisation du dispositif selon l'une quelconque des revendications 1 à 10, permettant le transport continu et le dosage de substances pulvérulentes, le cas échéant de matières métalliques pulvérulentes, ou pour le transport continu de poudres chimiques.
